(19) Europäisches Patentamt / European Patent Office / Office européen des brevets

(11) **EP 2 983 965 B1**

(12) **FASCICULE DE BREVET EUROPEEN**

(45) Date de publication et mention de la délivrance du brevet:
**13.09.2017 Bulletin 2017/37**

(21) Numéro de dépôt: **14723463.7**

(22) Date de dépôt: **10.04.2014**

(51) Int Cl.:
**B62D 15/02** $^{(2006.01)}$

(86) Numéro de dépôt international:
**PCT/FR2014/050870**

(87) Numéro de publication internationale:
**WO 2014/167255 (16.10.2014 Gazette 2014/42)**

(54) **STRATÉGIE DE PARKING EN CRÉNEAU PAR UNE TRAJECTOIRE EN COURBURE CONTINUE**

PARALLEL-EINPARKEN STRATEGIE MIT EINER TRAJEKTORIE MIT DURCHGEHENDEN KRÜMMUNG

PARALLEL PARKING STRATEGY USING A CONTINUOUS CURVED TRAJECTORY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.04.2013 FR 1353226**

(43) Date de publication de la demande:
**17.02.2016 Bulletin 2016/07**

(73) Titulaire: **Renault S.A.S.**
**92100 Boulogne-Billancourt (FR)**

(72) Inventeurs:
• **VOROBIEVA, Hélène**
  **F-92210 Saint Cloud (FR)**
• **MINOIU ENACHE, Nicoleta**
  **F-78000 Versailles (FR)**
• **GLASER, Sébastien**
  **F-78330 Fontenay-le-Fleury (FR)**

(56) Documents cités:
WO-A2-2006/069976    DE-A1-102005 058 809
DE-A1-102009 027 289    US-A1- 2007 282 503
US-A1- 2010 204 866    US-B2- 7 469 765

**Description**

La présente invention concerne le domaine des aides au parking pour véhicules automobiles, et plus particulièrement des systèmes d'aide au parking entièrement automatique pour la réalisation de manoeuvres de parking de type créneau.

La réalisation des manoeuvres en créneau est souvent une source de stress, par la difficulté de réalisation de ces manoeuvres, pouvant être liée à l'appréciation de différents paramètres de réalisation de ces manoeuvres que sont notamment, l'adéquation de la place de stationnement avec la longueur du véhicule, le positionnement initial du véhicule, l'enchaînement des manoeuvres de stationnement,... pouvant également entraîner des risques de dégradation du véhicule en manoeuvre et des véhicules bordant la place de parking visée.

De plus, l'immobilisation temporaire de la voie de circulation est également une source de stress par la gêne occasionnée pour les autres automobilistes.

Il a déjà été proposé, par les demandes FR12-57793 et FR12-58536 au nom du déposant, une proposition de parking automatique en créneau d'un véhicule par une succession de trajectoires formées d'arcs de cercle, se basant donc sur les méthodes géométriques de planification de la trajectoire. Toutefois, cette méthode nécessite que le changement de direction soit réalisé à l'arrêt, ce qui provoque un effort important sur la colonne de direction, ainsi qu'une usure localisée des pneumatiques, la rotation des roues directionnelles étant effectuée sans déplacement desdites roues. DE102009027289 A1 est considéré comme l'art antérieur le plus proche et décrit le préambule de la revendication 1. La présente invention vise ainsi à améliorer les différentes manoeuvres de parking en évitant les problèmes mentionnés.

L'invention vise principalement à définir une trajectoire de parking, non par l'utilisation exclusive d'arcs de cercle, mais plus généralement par rayons de courbure continus.

Cette trajectoire peut être formée de plusieurs manoeuvres, une manoeuvre étant définie comme une séquence de différents braquages sans changement du signe de la vitesse, afin d'amener le véhicule dans une place de parking préalablement identifiée. Pour ce faire, l'invention utilise des clothoïdes.

Il est connu, par le document US 7,469,765 le parking en une manoeuvre selon une séquence à courbure continue de cinq courbes dont la deuxième et la quatrième sont des clothoïdes, la troisième et la cinquième étant des arcs de cercles. Un tel document ne permet pas le parking en plusieurs manoeuvres. Par ailleurs, la dernière séquence étant un arc de cercle, les roues ne sont pas redressées à la fin de la manoeuvre.

On connait également, par le brevet US 20070282503, le parking en une manoeuvre, où certaines parties de la trajectoire peuvent être des clothoïdes, mais la trajectoire n'est pas forcément complètement à courbure continue.

Un autre but de l'invention est de présenter une manoeuvre entièrement automatique, où le conducteur n'intervient pas dans les manoeuvres de stationnement, le véhicule pouvant même être inoccupé lors des manoeuvres.

La présente invention est atteinte à l'aide d'un procédé d'aide au parking d'un véhicule selon les caractéristiques de la revendication 1. Selon d'autres caractéristiques de l'invention :

- un déplacement en ligne droite est réalisé préalablement à une séquence de type I ou II,
- la vitesse de déplacement du véhicule est bridée à une valeur $V_{max}$,
- la consigne pour l'angle de braquage des roues est fonction de la distance déjà parcourue par le véhicule depuis le début de la manoeuvre,
- le paramètre A des clothoïdes est déterminé par les paramètres du véhicule constitués par le rayon de braquage minimal du véhicule, l'angle des roues correspondant à ce rayon de braquage, la vitesse de déplacement du véhicule, ainsi que la vitesse maximale de rotation des roues,
- les différentes manoeuvres sont réalisées automatiquement

D'autres caractéristiques et avantages de l'invention apparaîtront mieux à la lecture de la description suivante, en référence aux figures annexées parmi lesquelles :

- les figures 1 et 2 sont des représentations d'un véhicule et des différentes notations associées,
- la figure 3 est une figure explicative d'un déplacement selon une clothoïde,
- la figure 4 montre une séquence de planification de trajectoire selon l'invention,
- la figure 5 montre une autre séquence de planification de trajectoire selon l'invention,
- la figure 6 est un exemple de parking en une seule manoeuvre selon l'invention.

La présente invention se rapporte aux manoeuvres en créneau permettant de garer un véhicule le long d'une voie de circulation. La trajectoire que le véhicule doit suivre pour se garer prend en compte les contraintes du véhicule (notamment les dimensions, angles de braquage maximaux) et les contraintes de l'environnement (dimensions de la place de parking, non collision avec les autres véhicules garés lors des manoeuvres).

Il est supposé et admis que l'emplacement de parking, dans un repère global, ainsi que les dimensions de la place de parking sont connus ou déterminés par des capteurs après un passage du véhicule devant ladite place de parking libre. Si les capteurs ne permettent pas de calculer la profondeur de la place, mais que l'on sait d'une quelconque manière qu'il est possible de garer le véhicule à cet emplacement (par exemple par le fait que d'autres véhicules sont garés à côté), on supposera la profondeur égale à la largeur du véhicule.

Par ailleurs, on supposera que le véhicule est équipé des moyens suivants :

- un ou plusieurs capteurs permettant de mesurer les distances depuis l'avant, l'arrière et des 4 coins du véhicule jusqu'à l'obstacle le plus proche (ex : mur, véhicule de derrière), par exemple caméra, capteur ultra-son ou télémètre laser. Ces capteurs peuvent également servir de capteurs de positionnement au sein de la place de parking,

- un dispositif de mesure de l'odométrie fine pour mesurer la distance parcourue par le véhicule.

Le principe général de l'invention est de faire parcourir au véhicule une trajectoire par une suite temporelle d'angles de braquage à une vitesse donnée du véhicule, sans avoir calculé la trajectoire totale a priori, par l'utilisation de déplacement selon des clothoïdes.

Par définition, une telle courbe implique que le véhicule, au cours de sa trajectoire clothoïdique, roule à vitesse constante avec une vitesse de braquage constante. Par principe, on fixera une valeur maximale de déplacement du véhicule.

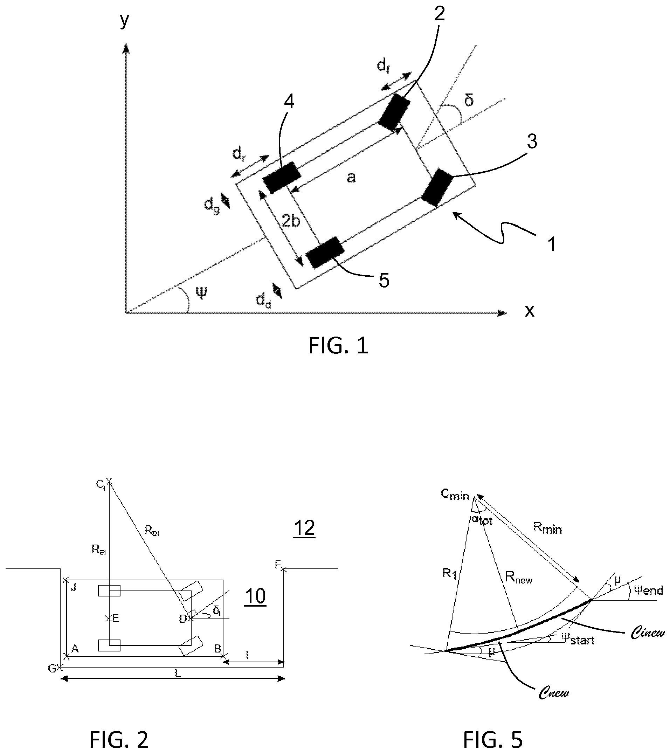

Le véhicule pris comme exemple d'application de l'invention, tel que présenté figure 1, est un véhicule 1 de type automobile, à traction, entraîné par un moteur (non représenté), comportant quatre roues 2 à 5 (roue avant gauche 2, roue avant droite 3, roue arrière gauche 4 et roue arrière droite 5), les roues avant étant les roues directrices.

Les caractéristiques de dimensionnement du véhicule sont nécessaires pour les différents calculs de trajectoire. On se reportera avantageusement aux demandes de brevet FR12-57793 et FR12-58536 pour un exemple de calcul de trajectoire. On définit ainsi :

- $a$ : l'empattement du véhicule

- $2b$ : la voie du véhicule,

- $d_f$ : Porte à faux avant du véhicule

- $d_r$ : Porte à faux arrière du véhicule

- $d_g$ : Distance entre les roues gauches et le côté gauche du véhicule

- $d_d$ : Distance entre les roues droites et le côté droit du véhicule

- $\delta$ : Angle que font les roues avant avec l'axe longitudinal du véhicule, $\delta_g$ et $\delta_d$ désignent respectivement $\delta$ lorsque le véhicule braque à gauche ou à droite

- $v$ : Vitesse longitudinale du véhicule

- $\psi$ : Angle de cap du véhicule dans un repère absolu $(x, y)$,

- $\alpha_{tot}$ : angle total à parcourir par le véhicule lors d'une séquence,

- $E$ : milieu de l'essieu arrière,

- $C$ : Centre des cercles utilisés. $C_l$ et $C_r$ désignent respectivement les centres lorsque le braquage se fait à gauche et à droite. $C_{min}$ désigne un centre correspondant au rayon minimum de braquage $R_{min}$, lorsque le sens du braquage n'est pas indiqué.

Les trajectoires sont définies pour le milieu de l'essieu arrière E. Ainsi, lorsqu'on parle de rayon R de braquage du véhicule, il s'agit alors de la distance entre le centre de rotation et le point E du véhicule.

Le véhicule est ainsi schématisé comme un rectangle où les points J, A et B définissent respectivement les coins arrière gauche, arrière droit et avant droit du véhicule, en référence à la figure 2. On définit également le point D qui est le point milieu de l'essieu avant du véhicule.

Les centres instantanés de rotation du véhicule sont notés $C_l$ ou $C_r$, selon que les roues du véhicule sont braquées à gauche ou à droite.

La place de parking est définie par sa longueur L, la valeur l correspondant à la différence entre la longueur de la place de parking et la longueur du véhicule.

Selon l'invention, la trajectoire est composée de séquences de deux types :

- Séquence de type I : Ce tracé est composé d'une éventuelle ligne droite, d'arcs de cercle et de clothoïdes. A chaque fois que le véhicule doit braquer dans une direction, une des deux séquences suivantes est effectuée.

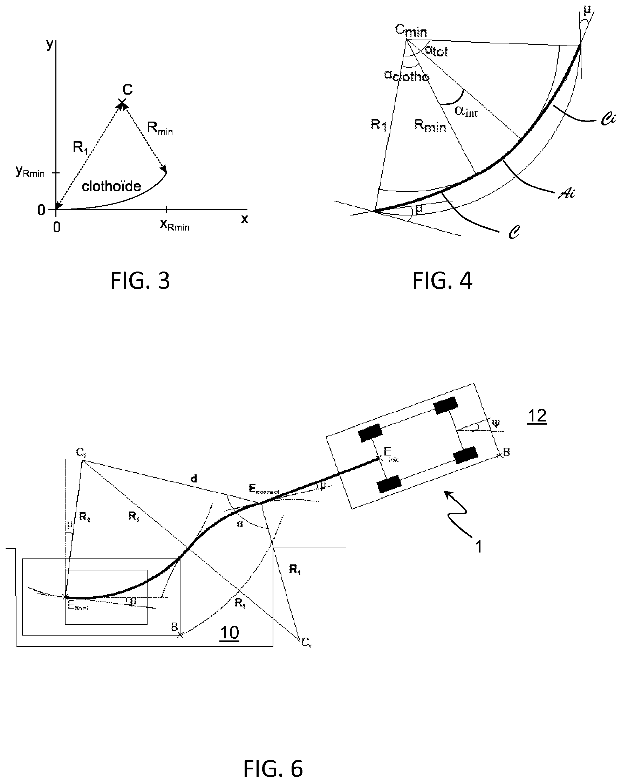

Dans la séquence I, en référence avec la figure 4 :

- déplacement selon une Clothoïde $\mathcal{C}$ : les roues sont initialement droites (rayon de courbure infini) et la clothoïde se termine avec le rayon de courbure désiré $R_{min}$,

- déplacement selon un arc de cercle intérieur : le rayon de courbure de cet arc est celui obtenu en fin de clothoïde (rayon de courbure $R_{min}$),

- déplacement selon une clothoïde inversée $\mathcal{C}i$ : Le rayon de courbure est initialement celui correspondant à l'arc de cercle précédent et la fin de la clothoïde se termine avec les roues droites (rayon de courbure infini).

Lorsque cette séquence I n'est pas possible, il est appliqué une séquence II suivante :

Séquence II, en référence à la figure 5 :

- déplacement selon une clothoïde $\mathcal{C}new$ : les roues sont initialement droites (rayon de courbure infini) et la clothoïde se termine avec le rayon de courbure désiré $R_{new}$ différent de $R_{min}$,

- déplacement selon une clothoïde inversée $\mathcal{C}inew$ : Le rayon de courbure est initialement celui correspondant à l'arc de cercle précédent ($R_{new}$) et la fin de la clothoïde se termine avec les roues droites (rayon de courbure infini).

Afin de profiter au mieux des capacités du véhicule, on souhaite que le rayon de l'arc de cercle intérieur soit de rayon minimal. Si l'on nomme $R_{minl}$ et $R_{minr}$ les rayons respectifs pour le braquage maximal respectivement à gauche et à droite, alors le rayon minimal de braquage, noté $R_{min}$ est égal à la valeur maximale entre et $R_{minl}$ et $R_{minr}$.

Par définition, une clothoïde est caractérisée par son paramètre A défini par $A^2 = R.L$, où R est l'inverse de la courbure en chaque point et L la longueur de la clothoïde en chaque point.

Dans le cas de la séquence I, pour une valeur $R = R_{min}$, pour un véhicule roulant à une vitesse maximale désirée $v_{longi}$, le paramètre A est défini par $A^2 = R_{min}.L_{min}$, où $L_{min}$ est la longueur minimale de la clothoïde admissible pour le véhicule pour passer d'une valeur de braquage des roues de 0 à $\delta_{max}$.

Si l'on considère $v_\delta$ la vitesse maximale désirée de rotation des roues, $v_{longi}$ la vitesse maximale désirée longitudinale du véhicule, $\delta_{max}$ l'angle des roues correspondant à $R_{min}$, alors le temps t nécessaire pour tourner les roues de 0 à $\delta_{max}$ est : $t = \dfrac{\delta_{max}}{v_\delta}$ . Par la suite, la longueur minimale $L_{min}$ parcourue par le véhicule braquant ses roues de 0 à $\delta_{max}$ est $L_{min} = v_{longi}.t$.

En référence à la figure 3, si le départ de la clothoïde se fait en (0,0) avec le véhicule orienté dans le sens positif de l'axe des abscisses, le centre C du cercle intérieur est alors donné par les formules classiques des clothoïdes :

$$x_C = x_{R\,min} - R_{min} \sin\tau$$

$$y_C = y_{R\,min} - R_{min} \cos\tau$$

Avec $\tau = \dfrac{L^2}{2A^2}$

Ce centre du cercle intérieur sera par la suite noté $C_{min}$ lorsqu'il sera calculé pour le rayon $R_{min}$.

De plus, les coordonnées (x,y) de chaque point de la clothoïde sont définies par les relations :

$$x = A\sqrt{\pi} C_f \left( \frac{L}{\pi A} \right)$$

et

$$y = A\sqrt{\pi} S_f \left( \frac{L}{\pi A} \right)$$

Avec $C_f$ et $S_f$ les intégrales de Fresnel définies par :

$$C_f(x) = \int_0^x \cos\frac{\pi}{2} u^2 du \text{ , et } S_f(x) = \int_0^x \sin\frac{\pi}{2} u^2 du \text{ .}$$

L'angle $\alpha_{clotho}$ associé à chaque clothoïde (calcul en se servant du théorème d'Al-Kashi) peut alors s'exprimer par :

$$\alpha_{clotho} = \arccos \frac{x_{R\min}{}^2 + y_{R\min}{}^2 + R_1{}^2 - R_{\min}{}^2}{-2R_1 R_{\min}}$$

On en déduit alors l'angle $\alpha_{int}$ à parcourir sur l'arc de cercle :

$$\alpha_{int} = \alpha_{tot} - 2\alpha_{clotho}$$

La séquence I n'est ainsi réalisable que si $\alpha_{tot} > 2\alpha_{clotho}$. Dans le cas contraire, il faut appliquer la séquence II.
Pour connaitre C ainsi que les coordonnées de divers points de la trajectoire situés sur des morceaux de clothoïdes, on est amené à calculer les intégrales de Fresnel. Ces intégrales peuvent s'écrire sous forme de série entière. Les coordonnées (x,y) de chaque point de la clothoïde peuvent alors s'écrire :

$$x = \sum_{n=0}^{\infty} \frac{(-1)^n L^{4n+1}}{(2n)!(4n+1)(\sqrt{2}A)^{4n}}$$

$$y = \sum_{n=0}^{\infty} \frac{(-1)^n L^{4n+3}}{(2n+1)!(4n+3)(\sqrt{2}A)^{4n+2}}$$

Une bonne approximation des coordonnées peut être faite en limitant n à des valeurs faibles, par exemple 10.
Dans le cas de la séquence II, deux éventualités peuvent se présenter suivant l'angle à parcourir. Dans tous les cas, l'angle $\alpha_{newclotho}$ associé à ces clothoïdes est tel que $\alpha_{tot} = 2\alpha_{newclotho}$.
Dans le cas où $\alpha_{tot} > 2\mu$ (le paramètre $\mu$ se calcule par la formule $\mu = \arctan(x_c/y_c)$), le paramètre de la clothoïde est :

$$A_{nex} = \sqrt{ \frac{R_1{}^2 \sin\frac{\beta}{2} + \mu^2}{\pi \left( \cos\frac{\beta}{2} C_f\left(\sqrt{\frac{\beta}{\pi}}\right) + \sin\frac{\beta}{2} S_f\left(\sqrt{\frac{\beta}{\pi}}\right) \right)^2} }$$

Où $\beta$ est la déflection qui est par définition l'écart entre les caps d'arrivée et de départ.

La longueur $L_{new}$ associée à cette clothoïde est alors :

$$L_{new} = A_{new}\sqrt{\beta}$$

Dans le cas où où $\alpha_{tot} < 2\mu$, le paramètre $A_{new}$ de la clothoïde est alors identique à celui de la séquence I (valeur : A), et la longueur $L_{new}$ est calculée de sorte à satisfaire la relation $\alpha_{tot} = 2\alpha_{newclotho}$.

Les coordonnées des points de la trajectoire nécessitant le calcul d'intégrales de Fresnel tel que précédemment mentionné, afin de ne pas mobiliser trop de capacités de calcul et surtout de temps de calcul, il est proposé, dans la méthode d'exécution de la stratégie de parking selon l'invention, non pas de calculer explicitement la trajectoire, ni même certains points de passage obligés, mais de calculer une consigne pour l'angle de braquage des roues en fonction de la distance déjà parcourue par le véhicule depuis le début de la manoeuvre.

Il est ainsi proposé de mémoriser la suite des courbes nécessaires : lignes droites, séquences I, séquences II, ainsi que le sens (marche avant, marche arrière) du véhicule selon ces courbes. Pour chaque ligne droite, sa longueur $L_{ligne}$ est mémorisée.

Il est ensuite calculé et mémorisé les valeurs $R_{min}$, A, $L_{min}$ et $\alpha_{clotho}$. Ceci ne nécessite que le calcul d'un seul doublet $(C_f, S_f)$ d'intégrales de Fresnel.

Par ailleurs, pour chaque séquence (type I ou II) on mémorise l'angle $\alpha_{tot}$ correspondant et la longueur $L_{séquence}$ de la séquence.

Par la suite, pour chaque séquence de type II, les valeurs $A_{new}$, $L_{new}$ sont calculées et mémorisées. Ceci ne nécessite que le calcul d'un seul doublet $(C_f, S_f)$ d'intégrales de Fresnel.

Ainsi, dans le meilleur des cas (uniquement des séquences type I), on n'aura eu à calculer qu'une seule fois un doublet d'intégrales de Fresnel. Dans le pire des cas (que des séquences type II), on aura eu à calculer N doublets d'intégrales de Fresnel, avec N le nombre de braquages dans une direction (gauche ou droite) donnée.

Le calcul de la vitesse longitudinale du véhicule dépend de la prise en charge de la vitesse par le conducteur ou par un dispositif automatique. Dans le premier cas, la vitesse est bridée par une valeur absolue maximale telle que définie dans la partie précédente. Le conducteur doit changer le sens de mouvement du véhicule suivant les indications du véhicule.

Dans le cas où la gestion de la vitesse est assurée par un dispositif automatique, indépendant du conducteur, le calcul est le suivant.

On considère la consigne de vitesse pour chaque marche avant ou marche arrière, quelque soient les séquences les constituant.

Soit $t_1$ le temps nécessaire pour atteindre $v_{longi}$ en accélérant avec une accélération constante $\gamma$ définie par les caractéristiques du véhicule : $t_1 = v_{longi} / \gamma$. Pendant cette durée le véhicule parcourt la distance $d_1 = \gamma . t_1^2/2$.

Dans l'hypothèse où $L_{tot} \geq 2d_1$, alors le véhicule reste à la vitesse maximale $v_{max}$ pendant un temps $t_2$ défini par : $t_2 = \dfrac{L_{tot} - 2d_1}{v_{max}}$ .

Dans le cas où $L_{tot} < 2d_1$, il suffira de ne pas aller jusqu'à la vitesse maximale.

Soit $k_v$ une variable prenant la valeur +1 si le véhicule est en marche avant et -1 s'il est en marche arrière.

Les consignes de vitesse du véhicule sont donc les suivantes pour un instant t compris dans l'intervalle (0, $2t_1 + t_2$) :

$$V(t) = k_v . \gamma . t \text{ pour } t \in [0, t_1],$$

$$V(t) = k_v . v_{max} \text{ pour } t \in [t_1, t_1 + t_2],$$

$$V(t) = - k_v . \gamma . t \text{ pour } t \in [t_1 + t_2, 2t_1 + t_2],$$

Par la suite, pour chaque pas de temps, grâce à la consigne de vitesse, il est possible de déduire la distance d parcourue lors d'un déplacement en ligne droite ou selon une séquence. Dès lors, une consigne d'angle de braquage peut être établie en fonction de la distance d, cette consigne est notée $\delta(d)$.

Pour une séquence de type I, la consigne élaborée pour le point E peut s'écrire, pour une distance comprise dans l'intervalle $(0, L_{sequence})$ :

$$\delta(d) = k_\delta \left| \arctan \frac{a}{R_{clotho}} \right| \text{ pour } d \in \left[ 0, L_{min} \right],$$

$$\delta(d) = k_\delta \left| \arctan \frac{a}{R_{min}} \right| \text{ pour } d \in \left[ L_{min}, L_{min} + L_{arc} \right],$$

$$\delta(d) = k_\delta \left| \arctan \frac{a}{R_{iclotho}} \right| \text{ pour } d \in \left[ L_{min} + L_{cercle}, L_{sequence} \right].$$

Avec $R_{clotho} = A^2/d$ et $R_{iclotho} = A^2/(L_{sequence} - d)$.

Pour une séquence de type II, la consigne peut s'écrire, de manière analogue :

$$\delta(d) = k_\delta \left| \arctan \frac{a}{R_{newclotho}} \right| \text{ pour } d \in \left[ 0, L_{new} \right],$$

$$\delta(d) = k_\delta \left| \arctan \frac{a}{R_{newiclotho}} \right| \text{ pour } d \in \left[ L_{new}, L_{sequence} \right],$$

Avec $R_{newclotho} - A_{new}^2/d$ et $R_{newiclotho} = A_{new}^2/(L_{sequence} - d)$.

La présente invention permet ainsi le parking en créneau en une ou plusieurs manoeuvres calculées par un algorithme à partir du moment où la place de parking est plus grande que le véhicule La trajectoire de parking est à courbure douce et optimale par rapport aux vitesses maximales désirées et par rapport aux paramètres du véhicule.

Le point de départ du véhicule peut être quelconque. Par conséquent, il est possible de recalculer à n'importe quel moment, pendant les manoeuvres de parking, de nouvelles séquences si la séquence précédente prévue n'a pas été réalisée correctement (nécessaire si le véhicule a dévié de sa trajectoire initialement prévue).

Des consignes en angle de braquage et en vitesse sont générées et mémorisées pour que le véhicule puisse se garer de manière autonome.

Ces consignes nécessitent peu de ressources de calcul et de mémoire. Le véhicule, dans une configuration de parking autonome, doit posséder les équipements et sécurités nécessaires à un fonctionnement autonome pour ce type de manoeuvres, comme par exemple :

- un système de commande automatique du braquage des roues,

- un système de commande automatique de l'accélération et des freins,

- un système de commande automatique de levier de vitesse pour changer la direction d'avancement du véhicule dans le cas du parking autonome.

Par la présente invention, l'exécution de parking est applicable pour tout véhicule à deux roues directrices avant, permettant de garer le véhicule automatiquement ou semi-automatiquement (parking main-libre, contrôle autonome seulement du braquage) dans un parking en créneau de manière optimale.

Il est également possible, par la présente invention, de sortir le véhicule automatiquement ou semi-automatiquement (contrôle autonome seulement du braquage) d'une place de parking créneau de manière optimale, et ce, pour des véhicules complètement autonomes ou avec un passager (conducteur) à bord.

**Revendications**

1. Procédé d'aide au parking d'un véhicule (1) depuis une voie de circulation (12) vers un emplacement libre de parking (10), par une ou des manoeuvres de type créneau, à l'aide d'une trajectoire partant de la voie de circulation (12) et constituée d'une suite d'angle de braquage et de vitesse de déplacement du véhicule, ladite trajectoire étant à courbure continue, dans lequel chaque manoeuvre de type créneau est constituée d'une des deux séquences suivantes :

   a) séquence I comprenant, dans un même sens de déplacement du véhicule:

   - un déplacement selon une Clothoïde $\mathscr{C}$, où les roues sont initialement droites et la clothoïde se termine avec un rayon de courbure $R_{min}$, correspondant au rayon minimum de braquage du véhicule,
   - un déplacement selon un arc de cercle intérieur, où le rayon de courbure de cet arc est celui obtenu en fin de clothoïde,
   - un déplacement selon une clothoïde inversée $\mathscr{C}i$, où le rayon de courbure est initialement celui correspondant à l'arc de cercle précédent et la fin de la clothoïde se terminant avec les roues droites,

   b) Lorsque la séquence I n'est pas possible, il est appliqué une séquence II, le procédé d'aide au parking d'un véhicule étant **caractérisé par** les étapes suivantes de cette séquence II, dans un même sens de déplacement du véhicule :

   - déplacement selon une clothoïde $\mathscr{C}new$, où les roues sont initialement droites, la clothoïde se terminant avec un rayon de courbure Rnew différent de $R_{min}$,
   - déplacement selon une clothoïde inversée $\mathscr{C}inew$, où le rayon de courbure est initialement celui correspondant à l'arc de cercle précédent ($R_{new}$) et la fin de la clothoïde se terminant avec les roues droites.

2. Procédé selon la revendication précédente, **caractérisé en ce qu'**un déplacement en ligne droite est réalisé préalablement à une séquence de type I ou II.

3. Procédé selon l'une des revendications précédentes, **caractérisé en ce que** la vitesse de déplacement du véhicule est bridée à une valeur $V_{max}$.

4. Procédé selon l'une des revendications précédentes, **caractérisé en ce que** la consigne pour l'angle de braquage des roues est fonction de la distance déjà parcourue par le véhicule depuis le début de la manoeuvre.

5. Procédé selon l'une des revendications précédentes, **caractérisé en ce qu'**un paramètre A des clothoïdes est déterminé par les paramètres du véhicule constitués par le rayon de braquage minimal du véhicule, l'angle des roues correspondant à ce rayon de braquage, la vitesse de déplacement du véhicule, ainsi que la vitesse maximale de rotation des roues.

6. Procédé selon l'une des revendications précédentes, **caractérisé en ce que** les différentes manoeuvres sont réalisées automatiquement

**Patentansprüche**

1. Einparkhilfeverfahren eines Fahrzeugs (1) von einer Fahrspur (12) zu einem freien Parkplatz (10) durch eines oder mehrere Manöver vom Typ des Längseinparkens mit Hilfe von einer Trajektorie, die von der Fahrspur (12) ausgeht und aus einer Folge von Lenkwinkel und von Bewegungsgeschwindigkeit des Fahrzeugs gebildet wird, wobei die Trajektorie mit durchgehender Krümmung ist, wobei jedes Manöver vom Typ des Längseinparkens aus einem der zwei folgenden Sequenzen gebildet wird:

   a) Sequenz I, umfassend in einer gleichen Bewegungsrichtung des Fahrzeugs:

   - ein Bewegen nach einer Klothoide C, wobei die Räder anfänglich gerade sind und die Klothoide mit einem Krümmungsradius $R_{min}$ endet, der dem Mindestlenkradius des Fahrzeugs entspricht,
   - ein Bewegen nach einem inneren Kreisbogen, wobei der Krümmungsradius dieses Bogens jener ist, der am Ende der Klothoide erhalten wird,

- ein Bewegen nach einer umgekehrten Klothoide $C_i$, wobei der Krümmungsradius anfänglich jener ist, der dem vorhergehenden Kreisbogen entspricht und wobei das Ende der Klothoide mit den geraden Rädern endet,

b) wenn die Sequenz I nicht möglich ist, wird eine Sequenz II angewendet, wobei das Einparkhilfeverfahren eines Fahrzeugs durch die folgenden Schritte dieser Sequenz II in einer gleichen Bewegungsrichtung des Fahrzeugs gekennzeichnet ist:

- Bewegen nach einer Klothoide $C_{new}$, wobei die Räder anfänglich gerade sind, wobei die Klothoide mit einem Krümmungsradius $R_{new}$ endet, der von $R_{min}$ verschieden ist,
- ein Bewegen nach einer umgekehrten Klothoide $C_{inew}$, wobei der Krümmungsradius anfänglich jener ist, der dem vorhergehenden Kreisbogen ($R_{new}$) entspricht und wobei das Ende der Klothoide mit den geraden Rädern endet.

2. Verfahren nach dem vorhergehenden Anspruch, **dadurch gekennzeichnet, dass** ein Bewegen in einer geraden Linie vor einer Sequenz des Typs I oder II durchgeführt wird.

3. Verfahren nach einem der vorhergehenden Ansprüche, **dadurch gekennzeichnet, dass** die Bewegungsgeschwindigkeit des Fahrzeugs auf einen Wert $V_{max}$ gedrosselt wird.

4. Verfahren nach einem der vorhergehenden Ansprüche, **dadurch gekennzeichnet, dass** der Sollwert für den Lenkwinkel der Räder von der Strecke abhängt, die von dem Fahrzeug seit dem Beginn des Manövers bereits zurückgelegt worden ist.

5. Verfahren nach einem der vorhergehenden Ansprüche, **dadurch gekennzeichnet, dass** ein Parameter A der Klothoiden durch die Parameter des Fahrzeugs bestimmt wird, die durch den Mindestlenkradius des Fahrzeugs, den Winkel der Räder, der diesem Lenkradius entspricht, der Bewegungsgeschwindigkeit des Fahrzeugs und der maximalen Drehzahl der Räder gebildet werden.

6. Verfahren nach einem der vorhergehenden Ansprüche, **dadurch gekennzeichnet dass** die verschiedenen Manöver automatisch durchgeführt werden.

**Claims**

1. Method for aiding the parking of a vehicle (1) from a traffic lane (12) to a vacant parking slot (10), through one or more manoeuvres of parallel parking type, with the aid of a trajectory starting from the traffic lane (12) and consisting of a succession of angle of turning and of speed of displacement of the vehicle, the said trajectory having continuous curvature, in which each manoeuvre of parallel parking type consists of one of the following two sequences:

a) sequence I comprising, in one and the same direction of displacement of the vehicle:

- a displacement according to a clothoid C, where the wheels are initially straight and the clothoid terminates with a radius of curvature $R_{min}$, corresponding to the minimum turning radius of the vehicle,
- a displacement according to an inner circular arc, where the radius of curvature of this arc is that obtained at the end of the clothoid,
- a displacement according to an inverted clothoid $C_i$, where the radius of curvature is initially that corresponding to the preceding circular arc, the end of the clothoid terminating with the wheels straight,

b) when sequence I is not possible, a sequence II is applied, the method for aiding the parking of a vehicle being **characterized by** the following steps of this sequence II, in one and the same direction of displacement of the vehicle:

- displacement according to a clothoid $C_{new}$, where the wheels are initially straight, the clothoid terminating with a radius of curvature $R_{new}$ different from $R_{min}$,
- displacement according to an inverted clothoid $C_{inew}$, where the radius of curvature is initially that corresponding to the preceding circular arc ($R_{new}$), the end of the clothoid terminating with the wheels straight.

**2.** Method according to the preceding claim, **characterized in that** a straight line displacement is carried out prior to a sequence of type I or II.

**3.** Method according to one of the preceding claims, **characterized in that** the speed of displacement of the vehicle is restricted to a value $v_{max}$.

**4.** Method according to one of the preceding claims, **characterized in that** the setting for the turning angle of the wheels is dependent on the distance already travelled by the vehicle since the beginning of the manoeuvre.

**5.** Method according to one of the preceding claims, **characterized in that** a parameter A of the clothoids is determined by the vehicle's parameters consisting of the minimum turning radius of the vehicle, the angle of the wheels corresponding to this turning radius, the speed of displacement of the vehicle, as well as the maximum rotation speed of the wheels.

**6.** Method according to one of the preceding claims, **characterized in that** the various manoeuvres are carried out automatically.

FIG. 1

FIG. 2

FIG. 5

FIG. 3

FIG. 4

FIG. 6

## RÉFÉRENCES CITÉES DANS LA DESCRIPTION

**Documents brevets cités dans la description**

- FR 1257793
- FR 1258536
- DE 102009027289 A1
- US 7469765 B
- US 20070282503 A